# EUROPEAN PATENT SPECIFICATION

(11) **EP 4 573 908 B1**
(45) Date of publication and mention of the grant of the patent: **24.06.2026**
(21) Application number: 24220776.9
(22) Date of filing: 17.12.2024
(51) Int. Cl.: A21C 5/02

(54) **DOUGH DIVIDING MACHINE AND METHOD FOR DIVIDING A DOUGH**
TEIGTEILMASCHINE UND VERFAHREN ZUM TEILEN EINES TEIGS
MACHINE DE DIVISION DE PÂTE ET PROCÉDÉ DE DIVISION D'UNE PÂTE

(30) Priority: 21.12.2023 IT 202300027651
(43) Date of publication of application: 25.06.2025
(73) Proprietor: Zeta 6 S.r.l., 36014 Santorso VI (IT)
(72) Inventor: Bortolotto, Massimo, Schio VI (IT)
(74) Representative: Giopato, Paolo

(56) References cited:
- DE-A1- 2 748 959
- GB-A- 2 048 159

## Description

The present disclosure relates generally to the baking and confectionery industry. In particular, the present disclosure relates to a dough dividing machine, and further relates to a method for dividing a dough using the dough dividing machine.

It is well known to use dividing machines to divide portions of a dough into predefined sizes and weights according to production requirements. Dividing machines according to the prior art are disclosed in GB2048159A and DE2748959A1. Generally, dividing machines involve the use of a hopper that holds a dough, and which is connected at the bottom to a system for dividing the dough into predefined portions.

It is also known that the dough must be cut into several portions of equal shape and weight.

For example, rounding dividing machines are known, which press various shapes, such as hexagonal, round or square, onto the dough in order to cut each portion of dough. In some cases, rounding of the dough portions can be achieved after cutting by means of vibrating plates. Dough dividing machines of this type are suitable for doughs with low hydration.

Another type of dividing machines known as volumetric depression dividers, such as the dividing machine according to the present disclosure, involves the suction of a certain quantity of dough to obtain portions. Such machines are suitable for doughs having a water content of more than 50%, i.e. having high hydration. Such dividing machines allow the organoleptic and quality properties of the dough to be maintained even after division into portions, due to the absence of mechanical cutting of the dough.

In a volumetric depression dividing machine, the hopper in the bottom is enclosed by a metal drum that can rotate on its axis by 90° in an alternating direction. The drum has a hole over which a cylinder runs, inside which a plunger, also called a piston, moves in an alternating rectilinear direction. In practice, in order to divide a dough, it is planned to suck the dough into a defined chamber in the drum and discharge a portion of that dough by means of the plunger or piston.

More specifically, when the loading opening of the drum is vertical, the piston inside it descends and creates a vacuum that sucks in the dough to fill the void left behind.

It follows that the piston slides in the cylinder defined in the drum between a first position and a second position. In the first position, which is in fact a lower dead centre, the piston is substantially retracted, so as to leave free space in the cylinder and allow the entrance of the dough to be divided. In the second position, the piston is fully forward in the cylinder to cover the cylinder space and push out the dough.

Due to the geometry of the parts defined above, the known dividing machine also includes two different openings, an inlet or loading opening and a dough outlet or unloading opening. These two openings, loading opening and unloading opening are angularly spaced, i.e. they form an angle with each other, preferably along a circular path. The angle is usually about 90°.

As a result, the piston is housed inside a drum body, and is fixed solidly together with the drum body. A cylinder is defined in the drum for the piston to slide.

The piston is then able to rotate together with the drum between the two different openings. In sequence, the drum rotates 90° and moves to the horizontal discharge opening and the same piston reverses the motion to expel the dough outwards.

The outgoing portion is conveyed by a conveyor belt to a machine unloading area.

Normally, above the belt in a fixed position, there can be a flour sprinkler that sprinkles the outgoing portion of the dough with flour and a net or a woollen roof that slows down the outgoing portion by making it pirouette in such a way as to give it an initial rounding.

It follows that the piston must perform a rectilinear motion between the two positions, and also a rotational motion together with the drum around the axis of the drum.

The size, i.e. the variation of dough that is sucked in and ejected, occurs by anticipating or postponing the rotation of the drum (time), which thus sucks in and ejects more or less dough.

The size adjustment of a volumetric divider can be manual with a handwheel or also with a motorised worm gear actuator.

The piston that slides inside the drum is fitted with a sealing gasket to create the dough-sucking effect.

If the piston is made of chrome-plated steel or in the stainless steel version, it must have lubrication on the outer profile to prevent seizing and to allow the dough to be released during ejection.

The oil used must be a food grade oil, and consumption per hour can be high. In other words, in dividing machines, a lubricant must be used to assist the sliding of the piston and to make it easier to detach the dough from the piston head. In particular, the lubricant used must be a food grade oil because of the contact with the dough and its consumption can be high.

In order to obtain the movement of piston and drum, known dividing machines involve the use of a motor that controls the double movement of the piston by means of an articulated system of connecting rods and levers. In particular: on the one hand, the drum can rotate to bring the piston into 90° rotation and this is achieved by means of a system of connecting rods and cranks, on the other hand, the piston can move between top dead centre and bottom dead centre with an eccentric system of levers and connecting rods driven by the same motor.

The system of connecting rods and cranks and eccentric system of levers and connecting rods is inside the dividing machine between the motor and the drum.

The basis of the present disclosure is a recognition on the part of the inventor of the present disclosure that dividing machines such as those made available to date by the prior art, while advantageous in many respects, have several limitations.

Specifically, known dividing machines have a large number of components for transmitting motion between the motor and the piston/drum in order to ensure proper operation. This leads to an increase in the total weight of the machine and the complexity of its operation and maintenance, an increase in the volume of the machine to accommodate the mechanism as well as a high noise level of the machine during use.

In addition, there is also the need to use high quantities of lubricant for the mechanical components in contact with the dough, which must be suitable for use in contact with food. In other words, there is the problem of high consumption of food-grade oil to lubricate the mechanical movements and to create anti-stickness in the suction piston head.

In addition, dividing machines according to the prior art allow limited adjustment of the operating and dosing parameters: in order to increase or decrease the quantity of dough obtained in each piston cycle, in fact, it is necessary to accelerate or slow down the rotary movement of the drum between the loading position and the dough unloading position by acting on the stroke of the eccentrics connected to the levers. This results in poor accuracy in the dosing of the dough to be divided and in a limited repeatability.

In other words, the movement is totally tied to the motor, which through various organs carries out the required movements to perform vertical suction and horizontal ejection. Adjustments are limited and the adjustment of the size is entrusted to a mechanical acceleration of the return of the drum to the loading/unloading position, since the piston has a fixed stroke; the consequence is little precision, very much linked to the type of dough, therefore potentially never the same. The piston always performs the same stroke. With doughs having different flours or varying percentages of water, adjustment is often required to achieve weight accuracy.

In other words, a manual intervention to adjust the size, i.e. to change the operation of the dividing machine, is often required to divide doughs with flours and/or water percentages different from those envisaged when designing the dividing machine. As a result, known dividing machines do not allow the set weight to be respected even with doughs that are not always perfectly equal with size changes without having many incorrect portions.

In addition, the maintenance required for known dividing machines is high and generally requires the intervention of a specialised technician, with the resulting costs in terms of time and money. In other words, the cleaning and replacement of piston gasket on all machines require costly interventions that cannot be carried out directly by the customer. Technical personnel trained for mechanical interventions are less and less available and are costly.

There is therefore also a need for less energy-intensive and less polluting dividing machines both in use and eventual disposal of the machinery.

In addition, another problem is a high noise level due to the very 'heavy' kinematic motion composed of large module gears linked by flywheels and levers that require greasing and maintenance.

This disclosure starts from the position of the technical problem of providing a dividing machine that can meet the above-mentioned needs with reference to the prior art and/or achieve further advantages.

This is achieved by means of a dough dividing machine and a method for dividing a dough according to the respective independent claims. Secondary characteristics of the object of the present disclosure are defined in the corresponding dependent claims.

In particular, in accordance with the present disclosure, in order to improve the known technique it is proposed to make a dividing machine for dividing a dough comprising a loading opening, an unloading opening and a piston, received in a drum body, or drum and configured to slide in the drum between a first position and a second position, and further configured to define a receiving chamber in the drum for at least a portion of the dough. Specifically, the receiving chamber is defined by the piston in the drum when the piston is in the first position, which is therefore preferably a back position. Furthermore, the drum and consequently the piston are further configured to rotate in solidarity between a loading position and an unloading position, wherein in the loading position the drum and piston are aligned with the loading opening and in the unloading position the drum and piston are aligned with the unloading opening. Specifically, the piston is aligned with either opening when its longitudinal axis passes through the respective opening. In the second position, the piston is advanced and can release the dough portion through the unloading opening.

In particular, the dividing machine further comprises an indexer device configured to transmit an intermittent rotary motion to the drum housing the piston between the loading position and the unloading position, i.e., configured to intermittently rotate the drum and thus also the piston between the loading position and the unloading position. Furthermore, the dividing machine further comprises a first electric motor and a second electric motor, wherein the first motor is configured to power the indexer device, intended to control the rotation of the drum and thus also of the piston, and the second motor is configured to control the sliding of the piston within the drum between the first position and the second position and vice versa
For example, the drum can house a cylindrical body that in turn houses the piston, which can slide between the first position and the second position and vice versa along a longitudinal direction of the drum and the cylindrical body.

In other words, according to the present disclosure, the drum is to be understood as a shroud body, a containment body or other similar enclosed body housing the piston within it. The drum may also have a cylinder shape housing the piston or it may itself house the cylinder wherein the piston slides.

The cylinder should be understood in a broad sense as the body defining the loading/unloading chamber, and can have any cross-section, even non-circular.

The piston stroke can also be controlled electronically.

In practice, a volumetric depression dividing machine is provided, having a mechanical system with two independent motors inside.

Such independent motors thus make the two main movements (rotation of the drum/piston and alternating rectilinear motion of the piston) independent, which simplifies the transmission mechanisms. In other words, the present disclosure envisages the use of an indexer driven by a respective motor, which may be an asynchronous motor or a brushless motor, with reduced dimensions and a high guarantee for the rotation of the drum, and a motor, preferably brushless and independent, which can drive, possibly via a reduction gear and a connecting rod, the alternating motion of the piston.

Specifically, the indexer transforms the rotary motion of the respective motor into oscillating motion which rotates the drum, e.g. by approximately 90°. The indexer is connected via an arm to the drum and preferably works in a closed container and in a lubricant bath. This eliminates or at least satisfactorily reduces maintenance. In other words, the two independent motors and the intermitter require very little maintenance. The dividing machine according to this disclosure therefore does not necessarily require mechanically synchronised levers with the consequent disadvantages of limited synchronisation of variable stroke levers and eccentrics and a complex and heavy kinematic mechanism.

The dividing machine according to this disclosure therefore does not necessarily require a system of levers and gears and flywheels which requires high motor power and upkeep maintenance with high lubricant and grease consumption. This allows to reduce weight and noise.

The electronic control can give full control with multiple programming and allow autonomous operation. A set weight in the piece size can thus be maintained with improved precision.

By reducing the use of lubricant, the problem of vaporisation and emission of lubricant vapours into the atmosphere can be reduced.

A reduction in mechanical devices also makes it possible to thoroughly sanitise/clean the machine, and simplifies any replacement of wearing parts. In fact, routine and extraordinary maintenance required for greasing mechanical devices or replacing important worn parts such as levers, module gears and flywheels can be reduced.

The indexer device is a indexer having parallel axes. For example, the mechanism of the indexer having parallel axes may be contained in an enclosed body and may be immersed in a lubricant bath, e.g. oil. In other words, the mechanism of the indexer device is housed in an enclosed body that contains the lubricant bath in which the mechanism is immersed.

Preferably, therefore, the indexer having parallel axes allows the connection, by means of a respective mechanism, of an input shaft, supplied with a continuous rotation by the first electric motor, and an output shaft that has, or is configured to move with, an intermittent rotary motion, i.e., cadenced by constant pauses in the rotation. For example, the output shaft may carry out a rotation of 90°, followed by a pause in which the output shaft remains stationary, and then carry out another rotation of 90° followed by another pause, continuing these phases in a continuous cycle. The rotation of the output shaft in each phase can also be a different amount from 90°, for example 180°.

Preferably, the intermittent rotary motion of the output shaft corresponds to the intermittent rotary motion of the drum between the loading position and the unloading position. That is to say, preferably, the rotation of the drum between the loading position and the unloading position is generated or driven by the intermittent rotary motion of the output shaft of the indexer having parallel axes. In other words, preferably the intermittent rotary motion of the output shaft allows the drum to move between the loading position and the unloading position, wherein each pause in which the output shaft remains stationary corresponds to a pause of the drum in the loading position or in the unloading position. Preferably, the intermittent rotary motion of the output shaft follows a continuous cycle that always repeats in the same direction of rotation and is transmitted to the drum to allow the drum to rotate intermittently between the loading position and the unloading position.

Preferably, the indexer having parallel axes is configured to transform the constant rotary motion of the input shaft, powered by the first electric motor, into the intermittent rotary motion of the output shaft, which is connected to the drum to which it can transmit the intermittent rotary motion, and the input shaft has a pair of conjugate profile cams and the output shaft has a plurality of radial cylinders, arranged around the output shaft. The axis of the radial cylinders is parallel to the axis of the output shaft and for example a plurality of radial bearings are mounted on the output shaft, preferably on a flange keyed to the output shaft. For example, radial cylinders may be arranged on the output shaft radially at 90° from each other. Further, a condition of engagement of the profiles of each cam of the pair of cams with the radial cylinders corresponds to a transfer of rotation from the input shaft to the output shaft, and a condition of free sliding of the profiles of each cam of the pair of cams with respect to the radial cylinders corresponds to an absence of transfer of rotation from the input shaft to the output shaft, i.e. a pause from rotation of said output shaft.

That is to say, preferably the cam profiles, the number of radial cylinders and their position around the output shaft define the amplitude of the intermittent rotation of the output shaft and the duration of the pauses between intermittent rotations.

Preferably, when the input shaft transfers rotational motion to the output shaft, the cam pair is configured to engage a total of at least two of the radial cylinders. That is, preferably the profiles of the cam pair are chosen such that, for example, each cam engages at least one radial cylinder when the input shaft transfers rotary motion to the output shaft. This ensures that there is no play in the transmission of the rotary motion, and also reduces noise and vibration of the indexer device, resulting in less wear of the dividing machine.

Preferably, the dividing machine further comprises a hopper configured to accommodate a dough to be divided, and preferably configured to slide between an operating position, wherein the hopper is aligned with the loading opening, and a secondary position, wherein the loading opening is clear of the hopper.

Furthermore, in accordance with the present disclosure, a method is proposed for dividing a dough by means of the dividing machine, which involves arranging a dough to be split at the loading opening and arranging the drum and piston in the loading position and the piston in the second position. The method also involves the following steps:
A - move the piston from the second position towards the first position by means of the second motor to accommodate a portion of the dough in the receiving chamber;
B - rotate the drum, and thus also the piston in which it is housed, from the loading position to the unloading position by means of the indexer device, which is driven by the first motor
C - move the piston to the second position by means of the second motor to eject the dough portion through the unloading opening

Further advantages, features and ways of using the subject matter of this disclosure will be evident from the following detailed description of its embodiments, presented for illustrative and non-limiting purposes.

It is, however, evident that each embodiment of the subject matter of this disclosure may present one or more of the advantages listed above; in any case, it is not required that each embodiment presents all the advantages listed simultaneously.

Reference will be made to the figures in the attached drawings, wherein:

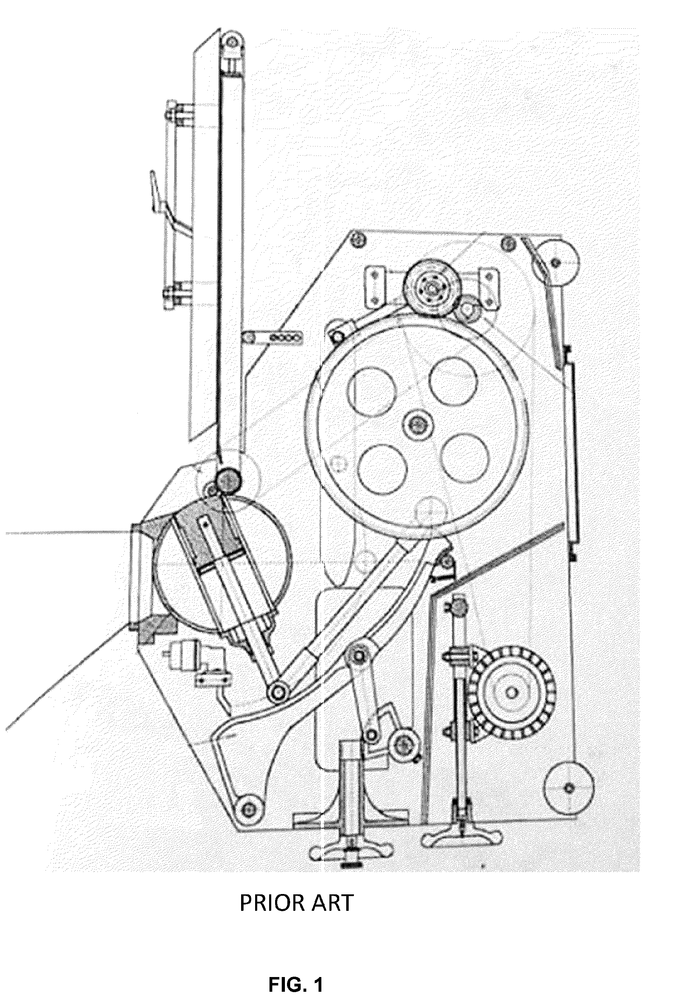

- Figure 1 shows a perspective view of a dividing machine according to the prior art;
- Figure 2 shows a perspective view of a dividing machine according to the present invention;

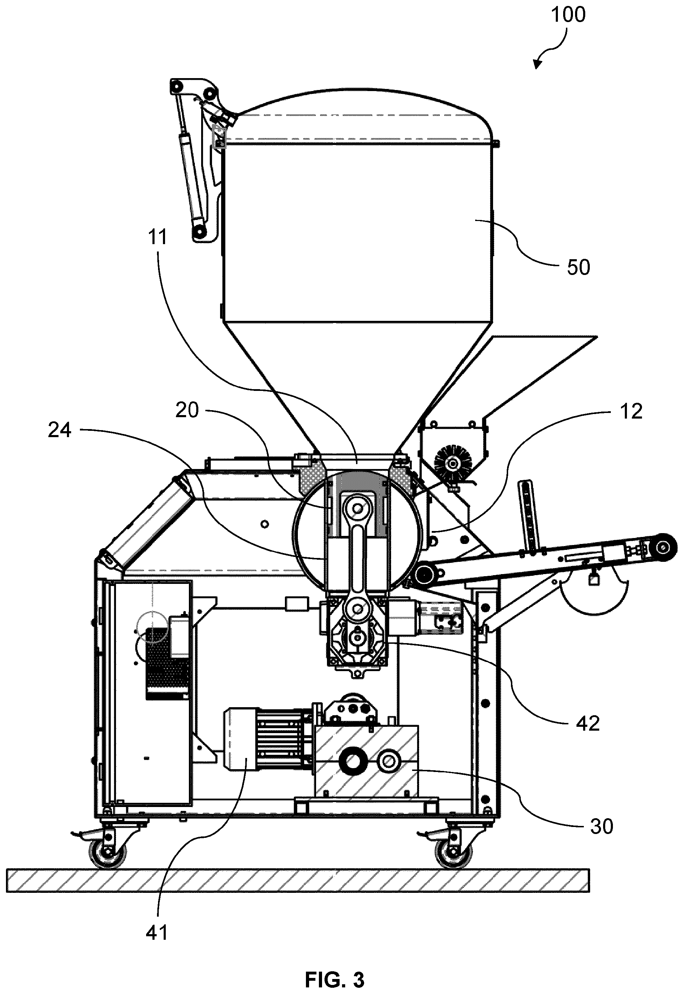

- Figure 3 shows a sectional view of the dividing machine of Figure 2;
- Figures 4A, 4B and 4C show a sectional view of the dividing machine of Figure 2 during the steps of the method according to the present invention;
- Figures 5A, 5B, 5C and 5D schematically show a detailed view of the piston during the steps of the method according to the present invention;

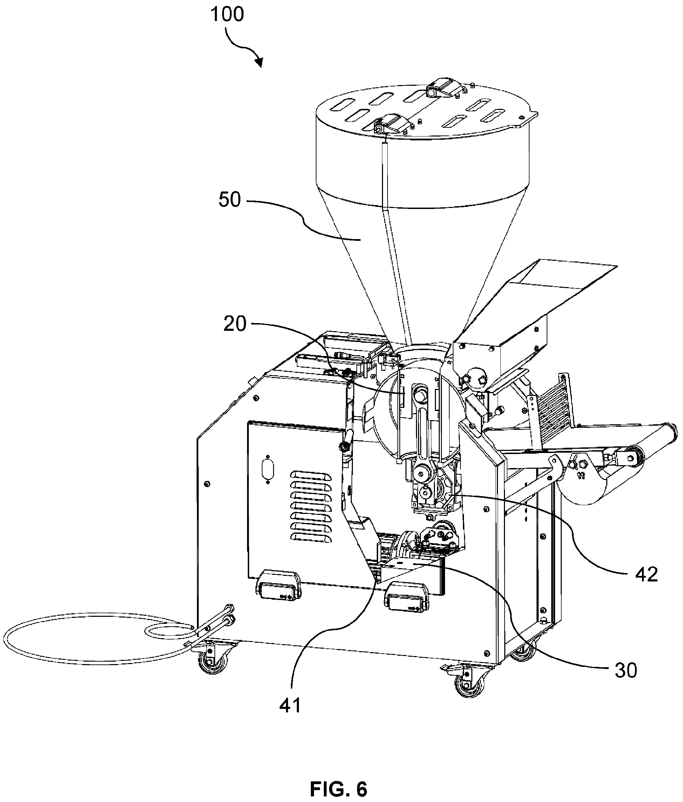

- Figure 6 shows a partially cropped perspective view of the dividing machine of Figure 2, in which the hopper is in the operating position;
- Figure 7 shows a partially cropped perspective view of the dividing machine of Figure 2, in which the hopper is in the secondary position;
- Figure 8 shows a perspective view of a indexer device having parallel axes forming part of the dividing machine according to one embodiment of the present invention, in which an upper portion of the indexer device is hidden to show the interior;
- Figure 9 shows a side view of the indexer device having parallel axes of Figure 8;
- Figures 10A and 10B each show a cross-sectional view of the indexer device having parallel axes of Figures 8 and 9, according to the A-A and B-B sections shown in

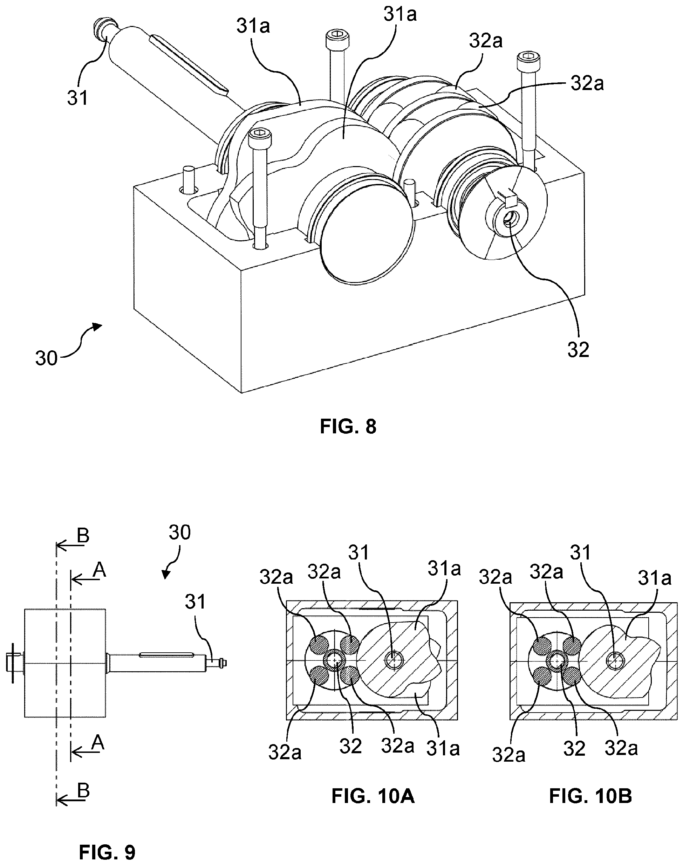

Figure 9, respectively.

With reference to the attached figures, an embodiment of a dividing machine for dividing a dough is indicated overall by the reference number 100.

In particular, the dividing machine 100 comprises a loading opening 11, an unloading opening 12, a drum 24, or drum body 24, and a piston 20, housed in the drum 24. The piston 20 is configured to slide in the drum 24 between a first position which corresponds to a lower dead centre, or backward position, or fully back position, and a second position which in the example corresponds to an upper dead centre, or forward position, or fully forward position.

Drum 24 is configured to define a receiving chamber 21 or chamber in the drum 24 to house/receive a portion of dough from the dough to be divided.

The drum 24 and the piston 20 are configured to rotate in solidarity between a loading position and an unloading position, wherein in the loading position the drum 24 and the piston 20 are aligned with the loading opening 11 and in the unloading position the drum 24 and the piston 20 are aligned with the unloading opening 12. That is, in the loading position the piston 20 is in communication with, or facing towards, the loading opening to allow an entry of a dough portion into the receiving chamber 21, while in the unloading position the piston 20 is in communication with, or facing towards, the unloading opening to allow an exit of the dough portion from the dividing machine 100.

In the context of the present disclosure, the term "piston" may be understood to mean a plunger or other similar mechanical organ configured to slide in a rectilinear and preferably alternating manner within the drum 24, for example to suck a portion of dough into the receiving chamber 21 of the drum 24, or to eject the portion of dough from the receiving chamber 21.

Furthermore, in the context of the present disclosure, a rotation of the drum 24 implies a rotation of the piston 20 in which it is housed, therefore the two expressions may be used interchangeably with respect to rotation between the loading position and the unloading position. In particular, the drum 24 can be rotated with respect to a rotation axis that is perpendicular to a longitudinal axis of the drum 24 and of the piston 20, as well as perpendicular to the sliding direction of the piston 20 in the drum 24.

In other words, in the loading position the drum 24 housing the piston 20 is aligned with the loading opening 11 and in the unloading position the drum 24 housing the piston 20 is aligned with the unloading opening 12. Therefore, in the loading position the longitudinal axis of the piston 20 passes through the loading opening 11 and in the unloading position the longitudinal axis of the piston 20 passes through the unloading opening 12.

In addition, the dividing machine 100 includes an indexer device 30 configured to transmit an intermittent rotary motion between the loading position and the unloading position to the drum 24 and thus also to the piston 20 In other words, the intermittent device allows the drum 24 and thus also the piston 20 to rotate intermittently between the loading position and the unloading position, preferably at regular intervals which are preferably configurable by a user.

That is to say that the piston 20 is integrally associated with drum 24 in such a way as to allow joint rotation of drum 24 and piston 20 between the loading and unloading positions, and at the same time in such a way as to allow piston 20 to slide within drum 24 between top dead centre and bottom dead centre.

In addition, the dividing machine 100 further comprises a first electric motor 41 and a second electric motor 42, wherein the first motor 41 is configured to power the indexer device 30 and the second motor 42 is configured to control the sliding of the piston 20 in the drum 24 between top dead centre and bottom dead centre.

It is clear that by means of the present invention, it is possible to considerably reduce the number of mechanical components for the operation of the dividing machine and thus obtain a lower weight and lower noise level compared to the prior art. The lower number of components also makes it possible to reduce the need for maintenance of the machine with consequent savings in money and downtime.

Furthermore, the dividing machine according to the present invention provides for the two main movements of the piston 20, i.e. sliding and rotating, to be independent of each other, allowing greater control of the machine's operating parameters.

In addition, a conveyor belt or a device for collecting dough portions can be provided at the unloading opening, for example.

Preferably, the indexer device 30 is configured to convert a uniform rotary motion input from the first motor 41 into an intermittent rotary motion output to the drum 24. That is to say, the indexer device 30 can perform the function of converting the uniform rotary motion of the first motor 41 into an intermittent or interval rotary motion of the drum 24 and thus of the piston 20 between the loading position and the unloading position. The presence of the indexer device 30 makes it possible to precisely control the rotation of the drum 24 and the piston 20 between the loading position and the unloading position and, at the same time, keeps the number of mechanical components in the dividing machine to a minimum.

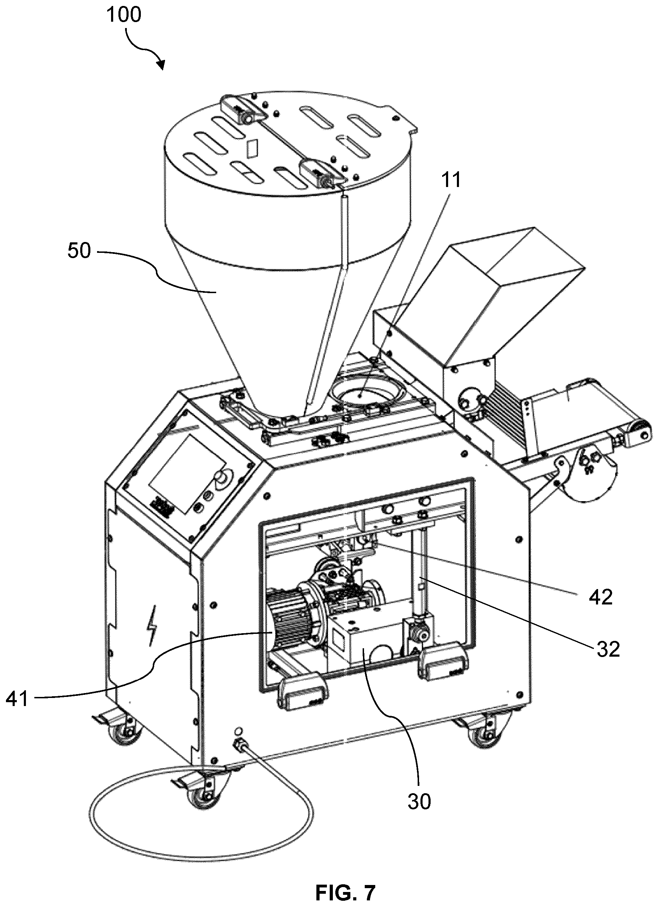

The indexer device is connected via an arm 32 or lever, or similar connection to the drum 24 (figure 7).

The indexer device 30 is a indexer having parallel axes configured to connect, by means of a respective mechanism, an input shaft 31, which is supplied with a continuous rotation by the first electric motor 41, and an output shaft 32, which has an intermittent rotary motion and is connected to the drum 24.

The input shaft 31 has a pair of cams 31a with conjugate profiles and the output shaft 32 has a plurality of radial cylinders 32a, arranged around the output shaft 32 such that the axis of the radial cylinders 32a is parallel to the axis of the output shaft 32. Furthermore, a condition of engagement of the profiles of each cam of the pair of cams 31a with the radial cylinders 32a corresponds to transfer of rotation from the input shaft 31 to the output shaft 32, and a condition of free sliding of the profiles of each cam of the pair of cams 31a with respect to the radial cylinders 31a corresponds to an absence of transfer of rotation from the input shaft 31 to the output shaft 32

That is, preferably the profiles of the cams 31a are chosen in such a manner as to allow engagement, i.e. hooking or contact allowing thrust, of the radial cylinders 32a of the output shaft 32 along the angle of rotation of the input shaft 32 for which transfer of rotation from the input shaft 31 to the output shaft 32 is required; more preferably, the cam profiles 31a are further chosen in a manner whereby free sliding of the cams 31a with respect to the radial cylinders 32a is permitted along the angle of rotation of the input shaft 31 for which a pause or absence of transfer of rotation from the input shaft 31 to the output shaft 32 is required.

Preferably, in the condition of transferring rotation from the input shaft 31 to the output shaft 32, the pair of cams 31a is configured to engage in total at least two of the radial cylinders 32a. That is, preferably for example, each cam engages, i.e. is in contact with and exerts a thrust with respect to, at least one radial cylinder.

Preferably, the number of radial cylinders 32a corresponds with the number of pauses made by the output shaft during a full rotation, i.e. 360°. Accordingly, the amplitude of each intermittent rotation of the output shaft 32 is defined by the ratio between a full rotation of 360° and the number of radial cylinders 32a.

Preferably, the second motor 42 is controllable to allow partial sliding of the piston 20 in the drum 24 between top dead centre and an intermediate point between top dead centre and bottom dead centre, such that the volume of the receiving chamber 21 in the drum 24 is controlled. That is to say, the piston 20 can accommodate in the receiving chamber 21 a portion of dough of a volume customised according to the partial sliding of the piston 20 in the drum 24 to a point intermediate between top dead centre and bottom dead centre, i.e. a volume less than the maximum volume obtainable by sliding the piston 20 to bottom dead centre.

It is clear that in this way it is possible to dose smaller quantities of dough to be divided with excellent precision at each cycle of piston 20, resulting in an advantageous versatility of the dividing machine compared to the prior art.

Preferably, the indexer device 30 is immersed in a lubricant bath, and preferably is housed in a closed container, e.g. sealed. This greatly reduces the need for maintenance of the dividing machine, while at the same time ensuring precise and reliable operation. In addition, this reduces the amount of lubricant vapour emissions into the atmosphere.

Preferably, the second motor 42 is connected to piston 20 via a speed reducer, one or more pulleys and a connecting rod that are configured to control the sliding of piston 20 in drum 24.

Preferably, in the unloading position, the piston 20 is rotated 90° from the loading position.

Preferably, the first motor 41 and the second motor 42 can be controlled independently of each other by respective electronic control means. In this way, it is possible to precisely control the operating parameters of the dividing machine and divide, for example, dough portions of different volumes and/or with different composition characteristics. Furthermore, in this way the dividing machine can be programmed to perform one or more cycles in series, even different from each other.

In this way, due to the speed of the dough portion change in format, waste can also be minimised.

In particular, the first motor 41 and/or the second motor 42 may be brushless electric motors, preferably of small size.

The piston movement, being preferably carried out by brushless motors, is preferably fully electronically controllable and programmable.

Preferably, the dividing machine 100 further comprises a hopper 50 configured to accommodate a dough to be divided, for example a standard hopper with a teflon interior or a pressure hopper. Preferably, the hopper 50 also allows for dividing a dough with a less than optimal hydration and facilitates precise dosing of the portions of the dough to be divided.

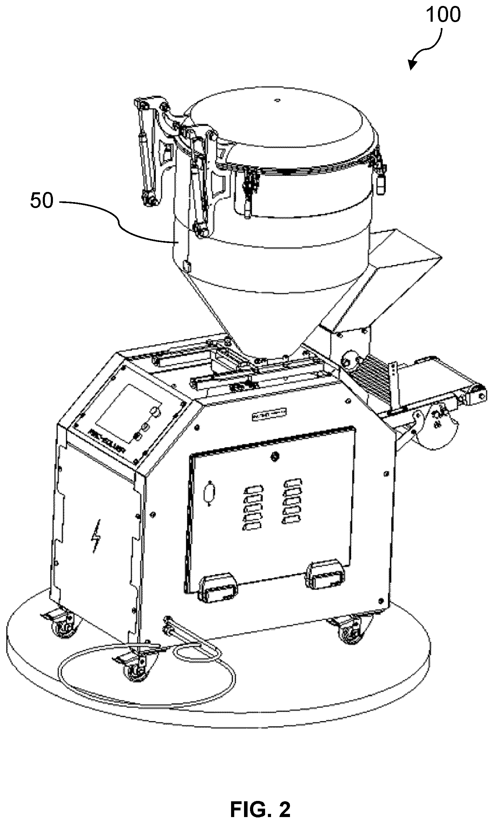

As can be seen for example by comparing Figures 2 and 7, the hopper 50 is preferably configured to slide between an operating position, wherein the hopper 50 is aligned with loading opening 11, and a secondary position, where the loading opening 11 is clear of the hopper 50.

Preferably, the hopper 50 comprises a plurality of spherical elements configured to allow the hopper 50 to slide between the operating position and the secondary position, and vice versa.

Preferably, the hopper 50 comprises a plurality of fastening elements configured to reversibly secure said hopper 50 in said operating position. That is, the plurality of fastening elements may secure, for example, the plurality of spherical elements to momentarily prevent them from sliding. That is, the plurality of fastening elements may be bolted screws to reversibly, i.e. temporarily, secure the sliding of said hopper 50.

In other words, for example, the fastening elements can hold the spherical elements in a locked position, and it is also possible to remove the fastening elements to move the spherical elements from the locked position to the unlocked position where they can slide the hopper between the operating position and the secondary position, and vice versa. For example, the transition from the locked position to the unlocked position of the spherical elements following the removal of the fastening elements may be aided by one or more springs, configured, for example, to aid a lifting of the spherical elements to allow sliding of the hopper 50.

In particular, by means of the sliding of the hopper 50, it is possible to access the receiving chamber 21, e.g. for cleaning or maintenance, without the need to lift and move hopper 50. It is clear that this facilitates the sanitising, cleaning and maintenance of the dividing machine, which can also be carried out by a single operator in a short time.

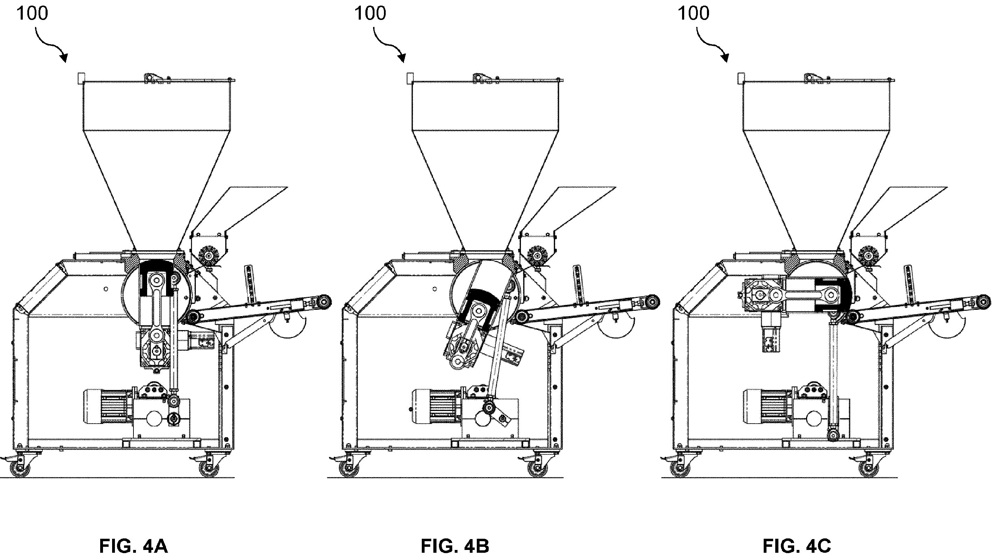

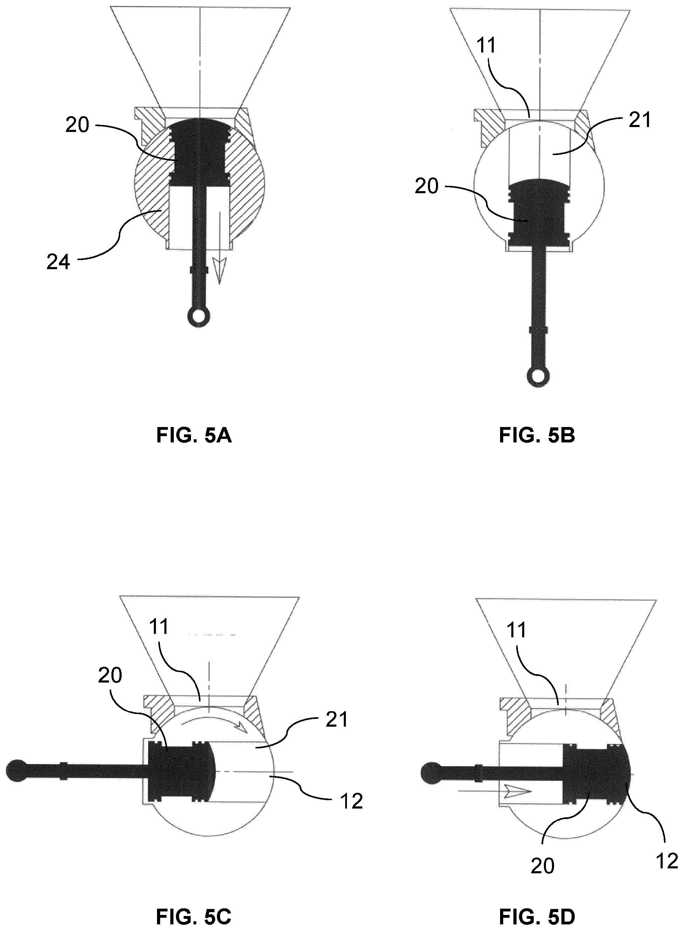

It also forms part of the present disclosure, with particular reference to Figures 4A, 4B, 4C and Figures 5A, 5B, 5C and 5D, a method for dividing a dough by means of a dividing machine 100 according to any one of the preceding embodiments, wherein a dough to be divided is arranged at the loading opening 11 and the drum 24 and the piston 20 are arranged in the loading position and the piston 20 is arranged at top dead centre. The method further comprises the following steps:
A - sliding the piston 20 in the drum 24 from top dead centre towards the bottom dead centre, e.g. to the bottom dead centre or to a point intermediate between the top dead centre and the bottom dead centre, by means of the second motor 42, to house a portion of dough in the receiving chamber 21;
B - rotating the drum 24 and thus also the piston 20 from the loading position to the unloading position by means of the indexer device 30, which is driven by the first motor 41;
C - sliding the piston 20 in the drum 24 to the top dead centre by means of the second motor 42 to eject the dough portion through the unloading opening 12.

Preferably, the method further involves:
D - rotating the drum 24 and thus also the piston 20 from the unloading position to the loading position by means of the indexer device 30, which is driven by the first motor 41;
wherein the method involves repeating steps A, B, C and D cyclically to obtain, for example, a series of dough portions.

Preferably, during phases A, B, C and D, the hopper 50 is fixed in the operating position and the method further provides for:
- removing the plurality of fastening elements to unlock the hopper 50,
- sliding the hopper 50 from the operating position to the secondary position by means of the plurality of spherical elements, e.g. to allow cleaning of the receiving chamber 21 and/or piston 20 and/or drum 24.

It is clear that by means of the present invention, it is possible to improve the ease of cleaning and sanitising of the dividing machine, which is crucial in food processing.

Furthermore, the present invention facilitates the replacement of parts of the dividing machine, for example due to wear and tear.

The present invention also reduces energy consumption compared to machines according to the prior art.

The subject matter of the present disclosure has thus far been described with reference to its embodiments. It is to be understood that there may be other embodiments pertaining to the same inventive core, all of which fall within the scope of protection of the claims set forth below.

## Claims

1. A dividing machine (100) for dividing a dough, wherein said dividing machine (100) comprises a loading opening (11), an unloading opening (12), a drum (24) and a piston (20) housed in said drum (24), said piston (20) being configured to slide in said drum (24) between a first position and a second position, and being configured to define a receiving chamber (21) in said drum (24) for a portion of dough, and wherein said drum (24) and said piston (20) are configured to rotate integrally between a loading position and an unloading position, wherein in said loading position said drum (24) and said piston (20) are aligned with said loading opening (11), and in said unloading position said drum (24) and said piston (20) are aligned with said unloading opening (12),
wherein said dividing machine (100) comprises an indexer device (30) configured to transmit an intermittent rotary motion between the loading position and the unloading position to said drum (24), wherein said dividing machine (100) further comprises a first electric motor (41) and a second electric motor (42), said first motor (41) being configured to power said indexer device (30) and said second motor (42) being configured to control said sliding of said piston (20) in said drum (24), and
**characterised in that**
said indexer device (30) is a indexer having parallel axes configured to connect an input shaft (31) powered with a continuous rotation by said first electric motor (41), and an output shaft (32) configured to move with an intermittent rotary motion and connected to said drum (24), and
wherein said input shaft (31) has a pair of cams (31a) with conjugate profiles and said output shaft (32) has a plurality of radial cylinders (32a), arranged around said output shaft (32) , wherein the axis of said radial cylinders (32a) is parallel to the axis of said output shaft (32) and wherein a condition of engagement of the profiles of each cam of said pair of cams (31a) with said radial cylinders (32a) corresponds to transfer of rotation from said input shaft (31) to said output shaft (32), and a condition of free sliding of the profiles of each cam of said pair of cams (31a) with respect to said radial cylinders (31a) corresponds to an absence of transfer of rotation from said input shaft (31) to said output shaft (32).

2. Dividing machine (100) according to the preceding claim, wherein said indexer device (30) is configured to convert a uniform rotary motion incoming from said first motor (41) into an intermittent rotary motion outgoing to said drum (24).

3. Splitting machine (100) according to any one of the preceding claims, wherein in said condition of transfer of rotation from said input shaft (31) to said output shaft (32), said pair of cams (31a) is configured to engage a total of at least two of said radial cylinders (32a).

4. Dividing machine (100) according to any one of the preceding claims, wherein said second motor (42) is controllable to allow partial sliding of said piston (20) in said drum (24) between said second position and an intermediate point between said first position and said second position, so as to control the volume of said receiving chamber (21).

5. Dividing machine (100) according to any one of the preceding claims, wherein said indexer device (30) is immersed in a lubricant bath and is received in a closed container containing said lubricant bath.

6. Dividing machine (100) according to any one of the preceding claims, wherein said second motor (42) is connected to said piston (20) by means of a speed reducer, one or more pulleys and a connecting rod.

7. Dividing machine (100) according to any one of the preceding claims, wherein in said unloading position said drum (24) and said piston (20) are rotated 90° with respect to said loading position.

8. Dividing machine (100) according to any one of the preceding claims, wherein the first motor (41) and the second motor (42) are independent motors that can be controlled independently of each other by respective electronic control means.

9. Dividing machine (100) according to any one of the preceding claims, further comprising a hopper (50) configured to receive a dough to be divided, wherein said hopper (50) is configured to slide between an operating position, wherein said hopper (50) is aligned with said loading opening (11), and a secondary position, wherein said loading opening (11) is free from said hopper (50).

10. Dividing machine (100) according to the preceding claim, wherein said hopper (50) comprises a plurality of spherical elements configured to allow said hopper (50) to slide between said operating position and said secondary position, and vice versa.

11. Dividing machine (100) according to the preceding claim, comprising a plurality of fastening elements configured to reversibly secure said hopper (50) in said operating position.

12. A method for dividing a dough by means of a dividing machine (100) according to any one of the preceding claims, wherein the method comprises arranging a dough to be divided at said loading opening (11) and arranging said drum (24) and said piston (20) at said loading position and arranging said piston (20) at top dead centre, wherein the method comprises the following steps:
A - sliding said piston (20) in said drum (24) from the second position towards the first position by means of said second motor (42) to house a portion of dough in said receiving chamber (21);
B - rotating said drum (24) and said piston (20) from the loading position to the unloading position by means of said indexer device (30), driven by said first motor (41);
C - sliding said piston (20) in said drum (24) to the second position by means of said second motor (42) to eject the dough portion through the unloading opening (12); wherein sliding said piston (20) in said drum (24) and rotating said drum (24) and said piston (20) are two independent movements.

13. Method according to the previous claim, which further provides for:
D - rotating said drum (24) and said piston (20) from the unloading position to the loading position by means of said indexer device (30), driven by said first motor (41);
and wherein the method provides for repeating steps A, B, C and D.

14. A method according to any one of claims 12 or 13 by means of a dividing machine (100) according to claim 13, wherein during said steps A, B, C and D said hopper (50) is fixed in the operating position and wherein said method further provides for:
- removing said plurality of fastening elements to unlock said hopper (50),
- sliding said hopper (50) from the operating position to the secondary position by means of said plurality of spherical elements.

## Patentansprüche

1. Teilmaschine (100) zum Teilen eines Teigs, wobei die Teilmaschine (100) eine Beladungsöffnung (11), eine Entladungsöffnung (12), eine Trommel (24) und einen in der Trommel (24) untergebrachten Kolben (20) umfasst, wobei der Kolben (20) konfiguriert ist, um in der Trommel (24) zwischen einer ersten Position und einer zweiten Position zu gleiten, und konfiguriert ist, um eine Aufnahmekammer (21) in der Trommel (24) für eine Teigportion zu definieren, und wobei die Trommel (24) und der Kolben (20) konfiguriert sind, um integral zwischen einer Beladungsposition und einer Entladungsposition zu rotieren, wobei in der Beladungsposition die Trommel (24) und der Kolben (20) an der Beladungsöffnung (11) ausgerichtet sind und in der Entladungsposition die Trommel (24) und der Kolben (20) an der Entladungsöffnung (12) ausgerichtet sind,
wobei die Teilmaschine (100) eine Indexiervorrichtung (30) umfasst, die konfiguriert ist, um eine intermittierende Rotationsbewegung zwischen der Beladungsposition und der Entladungsposition an die Trommel (24) zu übertragen, wobei die Teilmaschine (100) ferner einen ersten elektrischen Motor (41) und einen zweiten elektrischen Motor (42) umfasst, wobei der erste Motor (41) konfiguriert ist, um die Indexiervorrichtung (30) anzutreiben, und der zweite Motor (42) konfiguriert ist, um das Gleiten des Kolbens (20) in der Trommel (24) zu steuern, und
**dadurch gekennzeichnet, dass**
die Indexiervorrichtung (30) ein parallele Achsen aufweisender Indexierer ist, der konfiguriert ist, um eine Eingangswelle (31), die mit einer kontinuierlichen Rotation durch den ersten elektrischen Motor (41) angetrieben wird, und eine Ausgangswelle (32) zu verbinden, die konfiguriert ist, um sich mit einer intermittierenden Rotationsbewegung zu bewegen, und die mit der Trommel (24) verbunden ist, und
wobei die Eingangswelle (31) ein Paar von Nocken (31a) mit konjugierten Profilen aufweist und die Ausgangswelle (32) eine Vielzahl von radialen Zylindern (32a) aufweist, die um die Ausgangswelle (32) angeordnet sind, wobei die Achse der radialen Zylinder (32a) parallel zu der Achse der Ausgangswelle (32) ist und wobei ein Eingriffszustand der Profile jedes Nockens des Paars von Nocken (31a) mit den radialen Zylindern (32a) einer Überführung der Rotation von der Eingangswelle (31) zu der Ausgangswelle (32) entspricht und ein freier Gleitzustand der Profile jedes Nockens des Paars von Nocken (31a) in Bezug auf die radialen Zylinder (31a) einer Abwesenheit der Überführung der Rotation von der Eingangswelle (31) zu der Ausgangswelle (32) entspricht.

2. Teilmaschine (100) nach dem vorstehenden Anspruch, wobei die Indexiervorrichtung (30) konfiguriert ist, um eine gleichmäßige Rotationsbewegung, die von dem ersten Motor (41) eingeht, in eine intermittierende Rotationsbewegung umzuwandeln, die zu der Trommel (24) ausgeht.

3. Teilungsmaschine (100) nach einem der vorstehenden Ansprüche, wobei in dem Zustand der Überführung der Rotation von der Eingangswelle (31) zu der Ausgangswelle (32) das Paar von Nocken (31a) konfiguriert ist, um insgesamt mindestens zwei der radialen Zylinder (32a) in Eingriff zu nehmen.

4. Teilmaschine (100) nach einem der vorstehenden Ansprüche, wobei der zweite Motor (42) steuerbar ist, um dem Kolben (20) zu ermöglichen, in der Trommel (24) zwischen der zweiten Position und einem Zwischenpunkt zwischen der ersten Position und der zweiten Position teilweise zu gleiten, um so das Volumen der Aufnahmekammer (21) zu steuern.

5. Teilmaschine (100) nach einem der vorstehenden Ansprüche, wobei die Indexiervorrichtung (30) in einem Schmiermittelbad eingetaucht ist und in einem geschlossenen Behälter aufgenommen ist, der das Schmiermittelbad enthält.

6. Teilmaschine (100) nach einem der vorstehenden Ansprüche, wobei der zweite Motor (42) mit dem Kolben (20) mittels eines Untersetzungsgetriebes, einer oder mehrerer Riemenscheiben und einer Verbindungsstange verbunden ist.

7. Teilmaschine (100) nach einem der vorstehenden Ansprüche, wobei in der Entladungsposition die Trommel (24) und der Kolben (20) um 90° in Bezug auf die Beladungsposition rotiert sind.

8. Teilmaschine (100) nach einem der vorstehenden Ansprüche, wobei der erste Motor (41) und der zweite Motor (42) unabhängige Motoren sind, die unabhängig voneinander durch jeweilige elektronische Steuerungsmittel gesteuert werden können.

9. Teilmaschine (100) nach einem der vorstehenden Ansprüche, ferner umfassend einen Trichter (50), der konfiguriert ist, um einen zu teilenden Teig aufzunehmen, wobei der Trichter (50) konfiguriert ist, um zwischen einer Betriebsposition, wobei der Trichter (50) an der Beladungsöffnung (11) ausgerichtet ist, und einer sekundären Position, wobei die Beladungsöffnung (11) frei von dem Trichter (50) ist, zu gleiten.

10. Teilmaschine (100) nach dem vorstehenden Anspruch, wobei der Trichter (50) eine Vielzahl von kugelförmigen Elementen umfasst, die konfiguriert sind, um dem Trichter (50) zu ermöglichen, zwischen der Betriebsposition und der sekundären Position und umgekehrt zu gleiten.

11. Teilmaschine (100) nach dem vorstehenden Anspruch, umfassend eine Vielzahl von Befestigungselementen, die konfiguriert sind, um den Trichter (50) in der Betriebsposition reversibel festzuhalten.

12. Verfahren zum Teilen eines Teigs mittels einer Teilmaschine (100) nach einem der vorstehenden Ansprüche, wobei das Verfahren ein Anordnen eines zu teilenden Teigs an der Beladungsöffnung (11) und das Anordnen der Trommel (24) und des Kolbens (20) an der Beladungsposition und das Anordnen des Kolbens (20) an einem genauen oberen Mittelpunkt umfasst, wobei das Verfahren die folgenden Schritte umfasst:
A - Gleiten des Kolbens (20) in der Trommel (24) von der zweiten Position in Richtung der ersten Position mittels des zweiten Motors (42), um eine Teigportion in der Aufnahmekammer (21) unterzubringen;
B - Rotieren der Trommel (24) und des Kolbens (20) von der Beladungsposition zu der Entladungsposition mittels der Indexiervorrichtung (30), die durch den ersten Motor (41) betrieben wird;
C - Gleiten des Kolbens (20) in der Trommel (24) zu der zweiten Position mittels des zweiten Motors (42), um die Teigportion durch die Entladungsöffnung (12) auszustoßen;
wobei das Gleiten des Kolbens (20) in der Trommel (24) und das Rotieren der Trommel (24) und des Kolbens (20) zwei unabhängige Bewegungen sind.

13. Verfahren nach dem vorstehenden Anspruch, das ferner vorsieht:
D - Rotieren der Trommel (24) und des Kolbens (20) von der Entladungsposition zu der Beladungsposition mittels der Indexiervorrichtung (30), die durch den ersten Motor (41) betrieben wird;
und wobei das Verfahren ein Wiederholen der Schritte A, B, C und D vorsieht.

14. Verfahren nach einem der Ansprüche 12 oder 13 mittels einer Teilmaschine (100) nach Anspruch 13, wobei während der Schritte A, B, C und D der Trichter (50) in der Betriebsposition fixiert ist und wobei das Verfahren ferner vorsieht:
- Entfernen der Vielzahl von Befestigungselementen, um den Trichter (50) zu entriegeln,
- Gleiten des Trichters (50) von der Betriebsposition zu der sekundären Position mittels der Vielzahl von kugelförmigen Elementen.

## Revendications

1. Machine de division (100) permettant de diviser une pâte, dans laquelle ladite machine de division (100) comprend une ouverture de chargement (11), une ouverture de déchargement (12), un tambour (24) et un piston (20) logé dans ledit tambour (24), ledit piston (20) étant conçu pour coulisser dans ledit tambour (24) entre une première position et une seconde position, et étant conçu pour définir une chambre de réception (21) dans ledit tambour (24) pour une partie de pâte, et dans laquelle ledit tambour (24) et ledit piston (20) sont conçus pour se mettre en rotation de façon solidaire entre une position de chargement et une position de déchargement, dans laquelle dans ladite position de chargement ledit tambour (24) et ledit piston (20) sont alignés avec ladite ouverture de chargement (11), et dans ladite position de déchargement ledit tambour (24) et ledit piston (20) sont alignés avec ladite ouverture de déchargement (12),
dans laquelle ladite machine de division (100) comprend un dispositif indexeur (30) conçu pour transmettre un mouvement rotatif intermittent entre la position de chargement et la position de déchargement audit tambour (24), dans laquelle ladite machine de division (100) comprend en outre un premier moteur (41) électrique et un second moteur (42) électrique, ledit premier moteur (41) étant conçu pour alimenter en puissance ledit dispositif indexeur (30) et ledit second moteur (42) étant conçu pour commander ledit coulissement dudit piston (20) dans ledit tambour (24), et
**caractérisée en ce que**
ledit dispositif indexeur (30) est un indexeur ayant des axes parallèles conçus pour relier un arbre d'entrée (31) alimenté en puissance avec une rotation continue par ledit premier moteur (41) électrique, et un arbre de sortie (32) conçu pour se déplacer avec un mouvement rotatif intermittent et relié audit tambour (24), et
dans laquelle ledit arbre d'entrée (31) a une paire de cames (31a) avec des profils conjugués et ledit arbre de sortie (32) a une pluralité de cylindres radiaux (32a), agencés autour dudit arbre de sortie (32), dans laquelle l'axe desdits cylindres radiaux (32a) est parallèle à l'axe dudit arbre de sortie (32) et dans laquelle une condition de mise en prise des profils de chaque came de ladite paire de cames (31a) avec lesdits cylindres radiaux (32a) correspond à un transfert de rotation dudit arbre d'entrée (31) audit arbre de sortie (32), et une condition de coulissement libre des profils de chaque came de ladite paire de cames (31a) par rapport auxdits cylindres radiaux (31a) correspond à une absence de transfert de rotation dudit arbre d'entrée (31) audit arbre de sortie (32).

2. Machine de division (100) selon la revendication précédente, dans laquelle ledit dispositif indexeur (30) est conçu pour convertir un mouvement rotatif uniforme venant dudit premier moteur (41) en un mouvement rotatif intermittent sortant vers ledit tambour (24).

3. Machine de fractionnement (100) selon l'une quelconque des revendications précédentes, dans laquelle dans ladite condition de transfert de rotation dudit arbre d'entrée (31) audit arbre de sortie (32), ladite paire de cames (31a) est conçue pour venir en prise avec un total d'au moins deux desdits cylindres radiaux (32a).

4. Machine de division (100) selon l'une quelconque des revendications précédentes, dans laquelle ledit second moteur (42) est commandable pour permettre un coulissement partiel dudit piston (20) dans ledit tambour (24) entre ladite seconde position et un point intermédiaire entre ladite première position et ladite seconde position, de façon à commander le volume de ladite chambre de réception (21).

5. Machine de division (100) selon l'une quelconque des revendications précédentes, dans laquelle ledit dispositif indexeur (30) est immergé dans un bain de lubrifiant et est reçu dans un récipient fermé contenant ledit bain de lubrifiant.

6. Machine de division (100) selon l'une quelconque des revendications précédentes, dans laquelle ledit second moteur (42) est relié audit piston (20) au moyen d'un réducteur de vitesse, d'une ou plusieurs poulies et d'un embiellage.

7. Machine de division (100) selon l'une quelconque des revendications précédentes, dans laquelle dans ladite position de déchargement ledit tambour (24) et ledit piston (20) sont mis en rotation de 90° par rapport à ladite position de chargement.

8. Machine de division (100) selon l'une quelconque des revendications précédentes, dans laquelle le premier moteur (41) et le second moteur (42) sont des moteurs indépendants qui peuvent être commandés indépendamment l'un de l'autre par un moyen de commande électronique respectif.

9. Machine de division (100) selon l'une quelconque des revendications précédentes, comprenant en outre une trémie (50) conçue pour recevoir une pâte à diviser, dans laquelle ladite trémie (50) est conçue pour coulisser entre une position de fonctionnement, dans laquelle ladite trémie (50) est alignée avec ladite ouverture de chargement (11), et une position secondaire, dans laquelle ladite ouverture de chargement (11) est dégagée de ladite trémie (50).

10. Machine de division (100) selon la revendication précédente, dans laquelle ladite trémie (50) comprend une pluralité d'éléments sphériques conçus pour permettre à ladite trémie (50) de coulisser entre ladite position de fonctionnement et ladite position secondaire, et inversement.

11. Machine de division (100) selon la revendication précédente, comprenant une pluralité d'éléments d'attache conçus pour maintenir de manière réversible ladite trémie (50) dans ladite position de fonctionnement.

12. Procédé permettant de diviser une pâte au moyen d'une machine de division (100) selon l'une quelconque des revendications précédentes, dans lequel le procédé comprend l'agencement d'une pâte à diviser au niveau de ladite ouverture de chargement (11) et l'agencement dudit tambour (24) et dudit piston (20) au niveau de ladite position de chargement et l'agencement dudit piston (20) au niveau du point mort haut, dans lequel le procédé comprend les étapes suivantes :
A - le coulissement dudit piston (20) dans ledit tambour (24) de la seconde position en direction de la première position au moyen dudit second moteur (42) pour loger une partie de pâte dans ladite chambre de réception (21) ;
B - la rotation dudit tambour (24) et dudit piston (20) de la position de chargement à la position de déchargement au moyen dudit dispositif indexeur (30), entraîné par ledit premier moteur (41) ;
C - le coulissement dudit piston (20) dans ledit tambour (24) vers la seconde position au moyen dudit second moteur (42) pour éjecter la partie de pâte à travers l'ouverture de déchargement (12) ;
dans lequel le coulissement dudit piston (20) dans ledit tambour (24) et la rotation dudit tambour (24) et dudit piston (20) sont deux mouvements indépendants.

13. Procédé selon la revendication précédente, qui prévoit en outre :
D - la rotation dudit tambour (24) et dudit piston (20) de la position de déchargement à la position de chargement au moyen dudit dispositif indexeur (30), entraîné par ledit premier moteur (41) ;
et dans lequel le procédé prévoit la répétition des étapes A, B, C et D.

14. Procédé selon l'une quelconque des revendications 12 ou 13 au moyen d'une machine de division (100) selon la revendication 13, dans lequel pendant lesdites étapes A, B, C et D ladite trémie (50) est fixe dans la position de fonctionnement et dans lequel ledit procédé prévoit en outre :
- le retrait de ladite pluralité d'éléments d'attache pour déverrouiller ladite trémie (50),
- le coulissement de ladite trémie (50) de la position de fonctionnement à la position secondaire au moyen de ladite pluralité d'éléments sphériques.
